# EUROPÄISCHE PATENTSCHRIFT

(11) **EP 2 198 733 B1**
(45) Veröffentlichungstag und Bekanntmachung des Hinweises auf die Patenterteilung: **12.01.2011**
(21) Anmeldenummer: 08021867.0
(22) Anmeldetag: 17.12.2008
(51) Int. Cl.: A45C 13/10, B29C 65/70, A45C 5/03, B29C 44/12, B29C 45/14, B29C 70/76

(54) **Behältnis mit Reißverschluss zum Transport von Gegenständen**
Container with zip for transporting objects
Récipient doté d'une fermeture à glissière destiné au transport d'objets

(43) Veröffentlichungstag der Anmeldung: 23.06.2010
(73) Patentinhaber: Nöcker, Rosemarie, 72250 Freudenstadt (DE); Frey, Rita, 72221 Haiterbach (DE)
(72) Erfinder: Nöcker, Kurt, 72250 Freudenstadt (DE); Frey, Klaus-Peter, 72221 Haiterbach-Beihingen (DE)
(74) Vertreter: Späth, Dieter

(56) Entgegenhaltungen:
- EP-A- 0 463 534
- DE-C1- 19 724 592
- DE-U1- 20 301 888
- US-A- 2 115 424

## Beschreibung

Die Erfindung betrifft ein Behältnis zum Transport von Gegenständen, mit einer Unterschale und mit einer mit der Unterschale aufklappbar verbundenen Oberschale, die als boxartige Kunststoffteile ausgebildet sind, und mit einem Reißverschluss zum Schließen und Öffnen des Behältnisses, der sich wenigstens teilweise umlaufend um das Behältnis entlang von einander zugeordneten Randbereichen der Unter- und der Oberschale erstreckt, wobei Tragstreifen des Reißverschlusses mit Rändern jeweils in einem gegossenen Kunststoffverbindungsprofil eingebettet sind, das entlang den Randbereichen der Unterund der Oberschale verläuft. Die beiden an sich gleichwertigen Schalen des Behältnisses sind lediglich zur Unterscheidung in der Anmeldung als Unter- bzw. Oberschale bezeichnet. Die Bezeichnung orientiert sich dabei an der üblichen liegenden Lage des Behältnisses nach dem Füllen einer der oder der beiden Schalen mit Gegenständen und dem anschließenden Verschließen des Behältnisses, bei der der Reißverschluss im wesentlichen horizontal zum Untergrund angeordnet ist.

Es ist bekannt, Reißverschlüsse mit zwei voneinander trennbaren Reißverschlusshälften unter anderem auch als umlaufende Reißverschlüsse bei Behältern, Taschen, Koffern und dergleichen zu verwenden. Bei solchen Reißverschlüssen weisen die Reißverschlusshälften in der Regel eine an einem Tragstreifen angebrachte Reihe zahnartiger Kuppelglieder auf, die zum Verbinden und Trennen der Tragstreifen der Reißverschlusshälften durch Verschieben eines Schiebers In- und Außereingriff bringbar sind. Es sind ferner sogenannte Gleitverschlüsse bekannt, die anstelle der Kuppelglieder zwei fortlaufende rippenförmige flexible Kunststoffprofile aufweisen, die durch Verschieben eines Schiebers verbindbar und voneinander lösbar sind.

Aus der EP 0 463 534 A1 ist ein Behälter zum ordentlichen Aufbewahren einer Anzahl von Gegenständen bekannt, der einen Behälterkörper, einen in dem Behälterkörper angeordneten unterteilten Einsatz sowie einen Behälterdeckel zum Schließen des Behälterkörpers umfasst. Der Behälter weist einen Reißverschluss zum Öffnen und Schließen auf. Der Reißverschluss hat zwei Reißverschlussbänder, die jeweils in Stützteile mit gabelförmigem Querschnitt aus einem elastischen Material eingebettet sind, die wiederum an Umfangsrändern des Behälterkörpers und des Behälterdeckels befestigt sind. Dabei sind die Umfangsränder in einen von oberen und unteren Teilen der gabelförmigen Stützteile bestimmten Zwischenraum lose eingesetzt und mit den Reißverschlussbändern in Schlitzen des oberen und unteren Teils vernäht, wobei sich ein Faden durch die Stützteile und die darin eingebetteten Reißverschlussbänder erstreckt.

Aus der DE 203 01 888 U1 ist außerdem ein Schalenkoffer mit einem Reißverschluss bekannt, der wasserdicht ausgelegt ist. Der Koffer mit Reißverschluss weist mindestens eine halbharte oder harte wasserdichte Kunststoffschale auf. Der Reißverschluss ist wenigstens teilweise umlaufend um den Koffer angeordnet, wobei der Reißverschluss mit seinen Tragstreifen mit den Rändern der Kofferhälften vernäht und die Naht mit einem wasserdichten Material abgedeckt ist. Ein Nachteil solcher Schalenkoffer ist die Schädigung der Kunststoffschalen durch Nahtlöcher und mögliche Undichtigkeiten an den Nahtlöchern.

Aufgabe der Erfindung ist es, ein Behältnis mit Reißverschluss zum Transport von Gegenständen vorzuschlagen, bei dem die Tragstreifen der Reißverschlusshälften jeweils in nur einem Arbeitsgang an der Unterschale bzw. der Oberschale zugfest und gleichzeitig abdichtend befestigt sind. Im Sinne der Aufgabe wird unter Reißverschluss auch ein Gleitverschluss verstanden, der umgangssprachlich häufig ebenfalls als Reißverschluss bezeichnet wird.

Diese Aufgabe wird erfindungsgemäß durch ein Behältnis zum Transport von Gegenständen mit den Merkmalen des Anspruchs 1 gelöst. Weitere vorteilhafte Ausgestaltungen sind den abhängigen Ansprüchen zu entnehmen.

Bei dem erfindungsgemäßen Behältnis ist in das jeweilige Kunststoffverbindungsprofil der Randbereich der Unterschale bzw. der Oberschale den eingebetteten Rändern der Tragstreifen gegenüberliegend eingebettet, wobei die Kunststoffverbindungsprofile stoffschlüssig mit der Unterschale bzw. der Oberschale und den Tragstreifen von Reißverschlusshälften verbunden sind. Das Kunststoffverbindungsprofil verbindet Reißverschlusshälften des Reißverschlusses mit der Unter- bzw. mit der Oberschale zugfest. Das Behältnis weist ein derartiges Kunststoffverbindungsprofil für jede Reißverschlusshälfte auf. Entsprechend der Zuordnung zu der Unterschale bzw. zu der Oberschale werden die beiden Kunststoffverbindungsprofile nachfolgend als unteres- bzw. oberes Kunststoffverbindungsprofil bezeichnet. Weiterhin werden ab hier die Unterschale und die Oberschale zusammen als Schalen des Behältnisses bezeichnet, falls keine Unterscheidung erforderlich ist.

Das untere und das obere Kunststoffverbindungsprofil erstreckt sich mindestens so weit wie der Reiß- oder Gleitverschluss umlaufend entlang der Randbereiche der Unter- und der Oberschale. Die beiden Kunststoffverbindungsprofile sind stoffschlüssig mit den Schalen des Behältnisses und den Reißverschluss- oder Gleitverschlusshälften verbunden, wobei das Material für das Kunststoffverbindungsprofil biegesteif oder gummielastisch gewählt sein kann. Die Tragstreifen der Reißverschlusshälften können beispielsweise Textil- oder Kunststoffstreifen sein.

Die Tragstreifen des Reißverschlusses sind an den Rändern und die Schalen des Behältnisses an den Randbereichen in das zugeordnete Kunststoffverbindungsprofil eingebettet. Das Kunststoffverbindungsprofil wird in einem Gießverfahren in einer Gießform hergestellt, in deren Kavität die Ränder der Reißverschlusshälften und die Randbereiche der Unter- bzw. der Oberschale ein Stück weit hineinragen. Die Ränder und die Randbereiche werden beim Ausgießen der Kavität mit Kunststoffmaterial, welches das Kunststoffverbindungsprofil bildet, umschlossen. Das beim Füllen der Kavität fließfähige Kunststoffmaterial verfestigt sich vorzugsweise nach einer kurzen Prozesszeit in der Gießform. Es kann eine oder mehrere Komponenten aufweisen.

Für das Einbetten in das Kunststoffverbindungsprofil weisen die Ränder der Reißverschlusshälften und die Randbereiche der Unterschale bzw. der Oberschale vorzugsweise einen Abstand zueinander auf, wobei das fließfähige Kunststoffmaterial beim Füllen der Gießform den jeweiligen Abstand zwischen einer der Reißverschlusshälften und der zugeordneten Schale des Behältnisses ausfüllt und die Reißverschlusshälften mit der Schale verbindet.

Bei einer Variante des erfindungsgemäßen Behältnisses erstreckt sich der Reißverschluss teilweise umlaufend um die Unterschale und die Oberschale und die Kunststoffverbindungsprofile erstrecken sich vollständig umlaufend um die beiden Schalen. Entlang von Randbereichen der beiden Schalen, die bei aufgeklapptem Behältnis einander benachbart sind, bilden die Kunststoffverbindungsprofile ein Filmscharnier, das die Ober- und die Unterschale schwenkbar, d. h. auf- und zuklappbar, miteinander verbindet. Das Filmscharnier ist ein insbesondere linienförmiger oder streifenförmiger und insbesondere gerader oder nur schwach gekrümmter Abschnitt, der so dünn ist und/oder aufgrund des Materials flexibel ist, so dass er die beiden Schalen schwenkbar nach Art einer Scharniers verbindet. Im Bereich des Filmscharniers sind die Kunststoffverbindungsprofile der beiden Schalen einstückig miteinander. Das Filmscharnier kann ganz oder abschnittsweise eine Verstärkung aufweisen beispielsweise in Form einer Gewebeeinlage. Die Verbindung der beiden Schalen des Behältnisses mittels der gegossenen Kunststoffverbindungsprofile, die in einem Abschnitt als Filmscharnier ausgebildet sind, kann unabhängig von der Einbettung der Tragstreifen der Reißverschlusshälften in die Kunststoffverbindungsprofile ausgeführt werden. Das Filmscharnier wird beim Einbetten der Reißverschlusshälften zusammen mit den Kunststoffverbindungsprofilen in einem einzigen Arbeitsgang in einer Gießform hergestellt, die zwei Kavitäten für die Randbereiche der beiden Schalen des Behältnisses aufweist. Die beiden Kavitäten sind in einem Abschnitt der Randbereiche der Ober- und der Unterschale, die einander bei aufgeklapptem Behältnis benachbart sind, über eine flache Aussparung miteinander verbunden, in die das fließfähige Kunststoffmaterial beim Füllen der Kavitäten fließt. Die flache Aussparung, die die beiden Kavitäten verbindet, formt das Filmscharnier.

Bei einer vorteilhaften Ausführungsform der Erfindung ist eine untere Reißverschlusshälfte mit dem Randbereich der Unterschale und eine obere Reißverschlusshälfte mit dem Randbereich der Oberschale in einer Ebene angeordnet. Dabei sind in den Kunststoffverbindungsprofilen die Reißverschlusshälften zu der zugeordneten Unterschale bzw. Oberschale vorzugsweise mit Abstand angeordnet. Sie sind miteinander fluchtend ausgerichtet.

In einer Ausführungsform des erfindungsgemäßen Behältnisses ist ein Innenfutter randseitig mit dem Kunststoffverbindungsprofil verbunden, wobei Ränder des Innenfutters mit in das Kunststoffverbindungsprofil eingebettet sind. Dabei ist das Innenfutter eng an die Innenflächen der Schalen des Behältnisses angepasst und stellenweise an der Unterschale und der Oberschale befestigt. Die Ränder des Innenfutters können innen an den Randbereichen der Schalen des Behältnisses anliegen oder einen Abstand zu den Randbereichen aufweisen. Beim Einbetten der Ränder des Innenfutters in das Kunststoffverbindungsprofil wird ebenfalls eine stoffschlüssige Verbindung zwischen dem Kunststoffverbindungsprofil und dem Innenfutter hergestellt.

Vorteilhafterweise sind bei einer Ausführungsform der Erfindung die Ränder des Innenfutters mit den Tragstreifen der Reißverschlusshälften vernäht. Dies vereinfacht die genaue Positionierung der Ränder in der Kavität zum Einbetten in die Kunststoffverbindungsprofile. Als besonders zweckmäßig hat es sich erwiesen, die Ränder des Innenfutters derart in der Gießform anzuordnen, dass die Ränder innen an den Randbereichen der Unter- bzw. der Oberschale anliegen. Dabei ist es von Vorteil, wenn die Ränder des Innenfutters nicht bis zu der Kante des Randbereiches der jeweiligen Schale des Behältnisses reichen.

Vorzugsweise besteht das Kunststoffverbindungsprofil aus einem Polyurethan. Polyurethane, kurz als PUR bezeichnet, lassen sich von weich/gummielastisch bis hart einstellen.

Bei dem erfindungsgemäßen Behältnis zum Transport von Gegenständen handelt es sich vorzugsweise um einen Hartschalenkoffer, der vorzugsweise mit einem Textilreißverschluss ausgestattet ist. Der Textilreißverschluss wird idealerweise beim Einbetten in die Kunststoffverbindungsprofile von dem Kunststoffmaterial durchtränkt, wobei eine zugfeste stoffschlüssige Verbindung hergestellt wird. Dabei sind die boxartigen Kunststoffteile als stabile Schalen ausgebildet, die beispielsweise in einem Kunststofftiefziehverfahren hergestellt sind.

Nachfolgend wird die Erfindung anhand zweier in der Zeichnung dargestellten Ausführungsbeispiele näher erläutert. Weitere Merkmale der Erfindung ergeben sich aus der folgenden Beschreibung der Ausführungsbeispiele der Erfindung in Verbindung mit den Ansprüchen und der beigefügten Zeichnung. Die einzelnen Merkmale können für sich allein oder zu mehreren in beliebiger Kombination bei Ausführungsformen der Erfindung verwirklicht sein.

Es zeigen, eingespannt in einer rahmenförmigen Gießform in einer schematischen Querschnittsdarstellung:
- Figur 1: ein erstes Ausführungsbeispiel des erfindungsgemäßen Behältnisses in Form eines Hartschalenkoffers ohne Innenfutter,
- Figur 2: ein zweites Ausführungsbeispiel des erfindungsgemäßen Behältnisses in Form eines Hartschalenkoffers, bei dem das Innenfutter einen Abstand zu den Tragstreifen der Reißverschlusshälften aufweist;
- Figur 3: ein drittes Ausführungsbeispiel des erfindungsgemäßen Behältnisses in Form eines Hartschalenkoffers mit Innenfutter, bei dem das Innenfutter mit den Tragstreifen der Reißverschlusshälften vernäht ist, und
- Figur 4: ein viertes Ausführungsbeispiel des erfindungsgemäßen Behältnisses in Form eines Hartschalenkoffers, dessen Schalen über ein Filmscharnier schwenkbar miteinander verbunden sind.

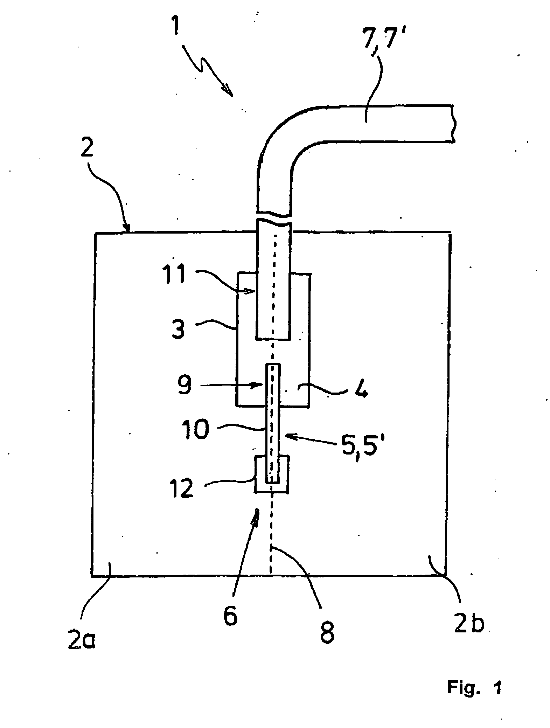

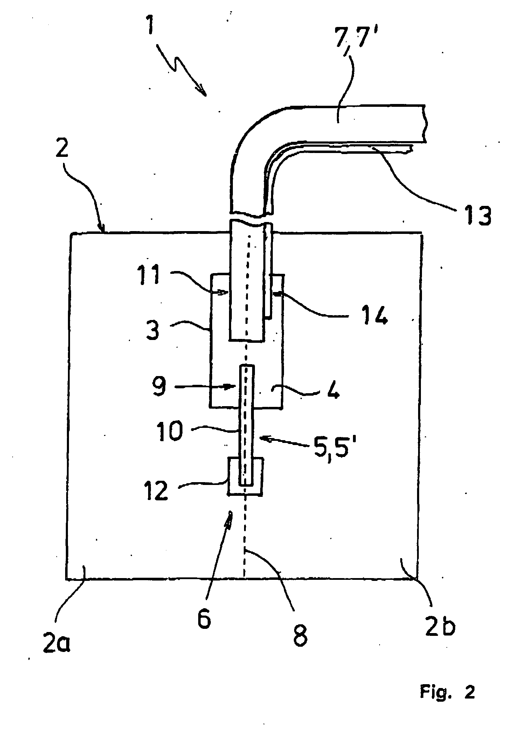

Die Figuren 1, 2 zeigen das erfindungsgemäße Behältnis 1, nämlich einen Kunststoff-Hartschalenkoffer, eingespannt in eine Gießform 2, die aus zwei trennbaren Gießformhälften 2a, 2b, besteht. Die Gießform 2 weist eine Kavität 3 (Formhohlraum) auf, die die Form eines Kunststoffverbindungsprofils 4 zum Verbinden einer Reißverschlusshälfte 5 bzw. 5' eines Reißverschlusses 6 mit einer Unterschale 7 bzw. mit einer Oberschale 7' des Behältnisses 1 bestimmt.

Die Reißverschlusshälften 5, 5' sowie die Schalen 7, 7' des Behältnisses 1 sind von den Gießformhälften 2a, 2b in einer Trennebene 8 klemmend gehalten. Dabei ragen Ränder 9 von Tragstreifen 10 der Reißverschlusshälften 5, 5' und Randbereiche 11 der Unterschale 7 bzw. der Oberschale 7' in die Kavität 3, die mit PUR-Kunststoffmaterial ausgefüllt ist bzw. wird. Die Ränder 9 der Tragstreifen 10 der Reißverschlusshälften 5, 5' und die Randbereiche 11 der Schalen 7, 7' sind in das Kunststoffverbindungsprofil 4 eingebettet, womit eine form- und stoffschlüssige Verbindung des Reißverschlusses 6 mit den Schalen 7, 7' des Behältnis 1 gebildet ist.

Der Reißverschluss 6 dient zum Schließen und zum Öffnen des Behältnisses 1, d.h. zum Verbinden und Lösen der Schalen 7, 7'. Die Tragstreifen 10 der Reißverschlusshälften 5, 5' sind Textilstreifen und weisen an einem der Schale 7, 7' abgewandten Rand einander zugeordnete, lösbar miteinander verbindbare zahnartige Kupplungsglieder 12 auf (sog. Krampen, umgangssprachlich "Reißverschlusszähne"). Die untere Reißverschlusshälfte 5 ist mit dem Randbereich 11 der Unterschale 7 und die obere Reißverschlusshälfte 5' mit dem Randbereich 11 der Oberschale 7' in einer Ebene angeordnet. Sie liegen einander jeweils schmalseitig mit Abstand gegenüber.

Das Kunststoffverbindungsprofil 4, das aufgrund des verwendeten PUR-Materials gummielastische Eigenschaften aufweist, übergreift die Randbereiche 11 der Unterschale 7 bzw. der Oberschale 7' des Behältnisses 1 sowie die Ränder 9 der Tragstreifen 10 der zugeordneten Reißverschlusshälften 5, 5'. Die Kunststoffverbindungsprofile 4 stellen eine biegsame und wasserdichte Verbindung zwischen den Schalen 7, 7' und den Reißverschlusshälften 5, 5' des Behältnisses 1 her.

Das in der Figur 2 dargestellte zweite Ausführungsbeispiel des erfindungsgemäßen Behältnisses 1 entspricht im wesentlichen dem in der Figur 1 dargestellten ersten Ausführungsbeispiel. Es unterscheidet sich von dem ersten Ausführungsbeispiel durch ein Innenfutter 13, das an einer Innenseite der Unterschale 7 bzw. der Oberschale 7' anliegt oder etwas Abstand von der Schale 7, 7' aufweist. Das Kunststoffverbindungsprofil 4 verbindet einen Rand des Innenfutters 13 und die Tragstreifen 10 des Reißverschlusses 6 mit den Randbereichen 11 der Schalen 7, 7' des Behältnisses 1. Dabei liegt ein Rand 14 des Innenfutters 13 flächig innen an dem Randbereich 11 der Unterschale 7 bzw. der Oberschale 7' an.

In beiden Ausführungsbeispielen sind die textilen Tragstreifen 10 des Reißverschlusses 6 sind von dem PUR-Material der Kunststoffverbindungsprofile 4 durchtränkt und daher stabil mit den Randbereichen 11 der Schalen 7, 7' verbunden. Bei der Herstellung des Kunststoffverbindungsprofils 4 sind die Reißverschlusshälften 5, 5' des Reißverschlusses 6, die Schalen 7, 7' des Behältnisses 1 sowie die Ränder 14 des Innenfutters 13 gemeinsam von den Gießformhälften 2a, 2b in der Trennebene 8 klemmend gehalten.

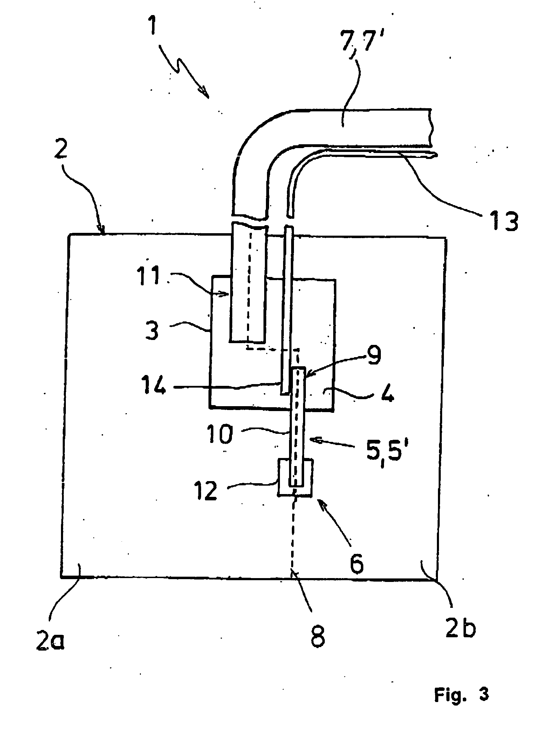

Das in der Figur 3 abgebildete dritte Ausführungsbeispiel unterscheidet sich von dem zweiten Ausführungsbeispiel dadurch, dass sich das Innenfutter 13 bis zu den Reißverschlusshälften 5, 5' hin erstreckt und die Ränder 14 des Innenfutters 13 mit den Rändern 9 der Tragstreifen 10 vernäht sind. In der Gießform 2 sind die Reißverschlusshälften 5, 5', die in der Trennebene 8 angeordnet sind, seitlich versetzt zu den Randbereichen 11 der Schalen 7, 7'.

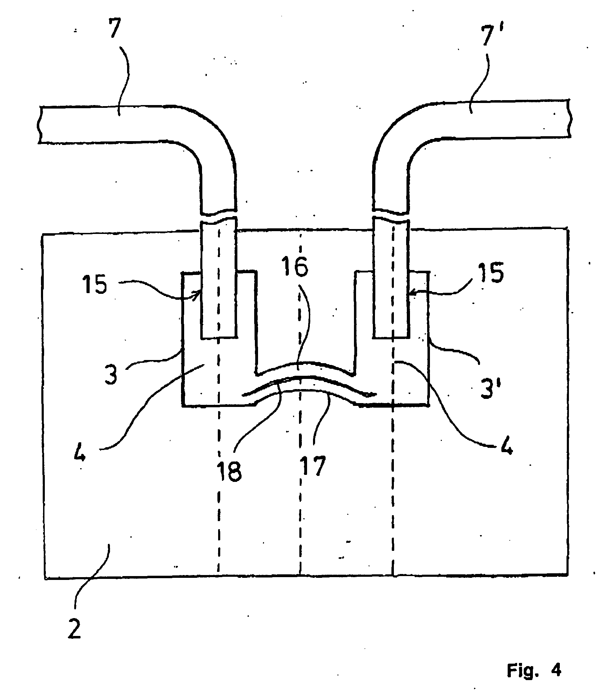

Das in Figur 4 gezeigte vierte Ausführungsbeispiel der Erfindung weist einen nur teilweise um das Behältnis 1 umlaufenden Reißverschluss 6 auf, während sich die Kunststoffverbindungsprofile 4 vollständig umlaufend um die Oberschale 7' und die Unterschale 7 das Behältnis 1 erstrecken. Figur 4 zeigt einen Abschnitt von Randbereichen 15 der beiden Schalen 7, 7', der keinen Reißverschluss aufweist, weswegen in Figur 4 der Reißverschluss 6 nicht zu sehen ist. In dem Bereich der Reißverschlusshälften 5, 5', der in der Figur nicht dargestellt ist, sind die Randbereiche 11 der Schalen 7, 7', die Ränder 9 der Tragstreifen 10 des Reißverschlusses 6 sowie gegebenenfalls die Ränder 14 eines Innenfutters 13 in den Kunststoffprofilen 4 wie zu Figuren 1 bis 3 beschrieben eingebettet.

Die Figur 4 zeigt das Behältnis 1 mit der neben der Oberschale 7 angeordneten Unterschale 7', eingespannt in eine Gießform 2, die zwei umlaufende Kavitäten 3, 3' aufweist, in die die Randbereiche 11, 15 der beiden Schalen 7, 7' des Behältnis 1 hineinragen. Die Kavitäten 3, 3' zum Gießen der Kunststoffverbindungsprofile 4 sind über eine flache längliche Ausnehmung 17 in der Gießform 2 miteinander verbunden, die sich entlang eines Abschnitts der Randbereiche 15 der beiden Schalen 7, 7' erstreckt, die bei aufgeklapptem Behältnis 1 einander benachbart sind. Die Ausnehmung 17 formt ein Filmscharnier 16 des Behältnisses 1, das die beiden Schalen 7, 7' schwenkbar, d. h. auf- und zuklappbar, miteinander verbindet. In dem Abschnitt, der das Filmscharnier 16 formt, weist die Gießform 2 wie dargestellt beispielsweise vier Segmente oder fünf Segmente (nicht dargestellt) auf. Zur Verstärkung des Filmscharniers 16 kann eine Gewebeeinlage 18 in das Filmscharnier 16 eingebettet sein.

## Patentansprüche

1. Behältnis (1) zum Transport von Gegenständen, mit einer Unterschale (7) und mit einer mit der Unterschale (7) aufklappbar verbundenen Oberschale (7'), die als boxartige Kunststoffteile ausgebildet sind, und mit einem Reißverschluss (6) zum Schließen und zum Öffnen des Behältnisses (1), der sich wenigstens teilweise umlaufend um das Behältnis (1) entlang von einander zugeordneten Randbereichen (11) der Unter- und der Oberschale (7, 7') erstreckt, wobei Tragstreifen (10) des Reißverschlusses (6) mit Rändern (9) jeweils in einem gegossenen Kunststoffverbindungsprofil (4) eingebettet sind, das entlang den Randbereichen (11) der Unter- und der Oberschale (7, 7') verläuft, **dadurch gekennzeichnet, dass** in das jeweilige Kunststoffverbindungsprofil (4) der Randbereich (11) der Unterschale (7) bzw. der Oberschale (7') dem eingebetteten Rand (9) des Tragstreifens (10) gegenüberliegend eingebettet ist, wobei die Kunststoffverbindungsprofile (4) stoffschlüssig mit der Unterschale (7) bzw. der Oberschale (7') und den Tragstreifen (10) von Reißverschlusshälften (5, 5') verbunden sind.

2. Behältnis nach Anspruch 1, **dadurch gekennzeichnet, dass** der Reißverschluss (6) teilweise umlaufend und die Kunststoffverbindungsprofile (4) vollständig umlaufend um das Behältnis (1) vorgesehen sind, und dass die Kunststoffverbindungsprofile (4) in einem Abschnitt der Randbereiche (15) der beiden Schalen (7, 7') des Behältnisses (1), die bei aufgeklapptem Behältnis (1) einander benachbart sind, ein Filmscharnier (16) bilden, das die beiden Schalen (7, 7') auf- und zuklappbar miteinander verbindet.

3. Behältnis nach Anspruch 1oder 2, **dadurch gekennzeichnet, dass** eine untere Reißverschlusshälfte (5) mit dem Randbereich (11) der Unterschale (7) und eine obere Reißverschlusshälfte (5') mit dem Randbereich (11) der Oberschale (7') in einer Ebene angeordnet sind.

4. Behältnis nach Anspruch 3, **dadurch gekennzeichnet, dass** in dem Kunststoffverbindungsprofil (4) die Reißverschlusshälften (5, 5') zu der jeweils zugeordneten Unterschale (7) bzw. Oberschale (7') mit Abstand angeordnet sind.

5. Behältnis nach einem der vorangegangenen Ansprüche, **gekennzeichnet durch** ein Innenfutter (13), dessen Rändern (14) mit in das Kunststoffverbindungsprofil (4) eingebettet sind.

6. Behältnis nach Anspruch 5, **dadurch gekennzeichnet, dass** die Ränder (14) des Innenfutters (13) mit den Tragstreifen (10) der Reißverschlusshälften (5, 5') vernäht sind.

7. Behältnis nach Anspruch 5, **dadurch gekennzeichnet, dass** die Ränder (14) des Innenfutters (13) innen an den Randbereichen (11) der Unterund der Oberschale (7, 7') anliegen.

8. Behältnis nach einem der vorangegangenen Ansprüche, **dadurch gekennzeichnet, dass** das Kunststoffverbindungsprofil (4) aus einem Polyurethan besteht.

9. Behältnis nach einem der vorangegangenen Ansprüche, **dadurch gekennzeichnet, dass** das Behältnis (1) ein Hartschalenkoffer ist.

10. Behältnis nach einem der vorangegangenen Ansprüche, **dadurch gekennzeichnet, dass** der Reißverschluss (6) ein Textilreißverschluss ist.

## Claims

1. Container (1) for the transport of objects, with a inner shell (7) and with an outer shell (7') that is connected by a hinge to the inner shell (7), which are both formed as box-type plastic parts and with a zip fastener (6) for closing and opening of the container (1), which is at least partially surrounding the container (1) along the border areas (11) of the inner and outer shells (7, 7') that are mutually interdependent, whereby supporting strips (10) of the zip fastener (6) are embedded with edges (9) in a moulded plastic connecting profile (4), which runs along the border areas(11) of the inner and outer shells (7, 7'), **characterized in that** the border area (11) of the inner shell (7) or outer shell (7') is embedded into the respective plastic connecting profile (4) opposite the embedded edge (9) of the supporting strip (10), whereby the plastic connecting profiles (4) are materially bonded to the inner shell (7) or the outer shell (7') and to the supporting strips (10) by the zip fastener halves (5, 5').

2. Container as per Claim 1, **characterized in that** the zip fastener (6) is specified so that it runs partly around the container (1) and the plastic connecting profile (4) so that it runs completely around the container (1) and so that the plastic connecting profiles (4) form a film hinge (16), which connects the two shells (7, 7') to each other in a section of the border areas (15) of both shells (7, 7') of the container (1), which are positioned next to each other when the container (1) is opened.

3. Container as per Claim 1 or 2, **characterized in that** a lower half of the zip fastener (5) is arranged in a common plane with the border area (11) of the inner shell (7) and an upper half of the zip fastener is arranged in a common plane with the border area (11) of the outer shell (7').

4. Container as per Claim 3, **characterized in that** in the plastic connecting profile (4) the halves of the zip fastener (5, 5') are positioned spaced apart at the respectively assigned inner shell (7) or outer shell (7').

5. Container as per one of the aforementioned claims, **characterized by** a lower lining (13) the edges (14) of which are embedded into the plastic connecting profile (4).

6. Container as per Claim 5, **characterized in that** the edges (14) of the lower lining (13) of the halves of the zip fasteners (5. 5') are sown together.

7. Container as per Claim 5 **characterized in that** the edges (14) of the lower lining (13) are fitted within the border areas of the inner and outer shells (7, 7').

8. Container as per one of the aforementioned claims **characterized in that** the plastic connecting profile (4) is made of polyurethane..

9. Container as per one of the aforementioned claims, **characterized in that** the container (1) is a hard shell case.

10. Container as per one of the aforementioned claims, **characterized in that** the zip fastener (6) is a textile zip fastener.

## Revendications

1. Réceptacle (1) affecté au transport d'objets, comprenant une coque inférieure (7) et une coque supérieure (7') reliée à ladite coque inférieure (7) avec aptitude à l'ouverture par pivotement, lesdites coques étant réalisées sous la forme de pièces en matière plastique de type caissons ; et une fermeture à glissière (6) qui est destinée à la fermeture et à l'ouverture dudit réceptacle (1), et s'étend en ceinturant au moins partiellement la périphérie dudit réceptacle (1) le long de régions marginales (11), mutuellement associées, desdites coques inférieure et supérieure (7, 7'), des bandes de support (10) de ladite fermeture à glissière (6) étant respectivement intégrées, par des bords (9), dans un profil de solidarisation (4) en matière plastique coulée s'étendant le long desdites régions marginales (11) desdites coques inférieure et supérieure (7, 7'), **caractérisé par le fait que** la région marginale considérée (11) de la coque inférieure (7) ou de la coque supérieure (7') est noyée, dans le profil respectif de solidarisation (4) en matière plastique, en vis-à-vis du bord intégré (9) de la bande de support (10), les profils de solidarisation (4) en matière plastique étant reliés matériellement auxdites coques respectivement inférieure (7) et supérieure (7'), et aux bandes de support (10) de moitiés (5, 5') de la fermeture à glissière.

2. Réceptacle selon la revendication 1, **caractérisé par le fait que** la fermeture à glissière (6) et les profils de solidarisation (4) en matière plastique sont prévus pour ceinturer, respectivement, une partie et l'intégralité de la périphérie dudit réceptacle (1) ; et **par le fait que** lesdits profils de solidarisation (4) en matière plastique forment, sur un tronçon des régions marginales (15) des deux coques (7, 7') dudit réceptacle (1) qui occupent des positions mutuellement voisines à l'état dudit réceptacle (1) ouvert par pivotement, une charnière pelliculaire (16) reliant lesdites deux coques (7, 7') l'une à l'autre avec faculté d'ouverture et de fermeture pivotantes.

3. Réceptacle selon la revendication 1 ou 2, **caractérisé par le fait qu'**une moitié inférieure (5) de la fermeture à glissière est située dans un plan avec la région marginale (11) de la coque inférieure (7), une moitié supérieure (5') de ladite fermeture à glissière est disposée dans un plan avec la région marginale (11) de la coque supérieure (7').

4. Réceptacle selon la revendication 3, **caractérisé par le fait que** les moitiés (5, 5') de la fermeture à glissière se trouvent, dans le profil de solidarisation (4) en matière plastique, à distance par rapport à la coque inférieure (7) et à la coque supérieure (7') respectivement associées.

5. Réceptacle selon l'une des revendications précédentes, **caractérisé par** une garniture intérieure (13) dont les bords (14) sont conjointement intégrés dans le profil de solidarisation (4) en matière plastique.

6. Réceptacle selon la revendication 5, **caractérisé par le fait que** les bords (14) de la garniture intérieure (13) sont cousus aux bandes de support (10) des moitiés (5, 5') de la fermeture à glissière.

7. Réceptacle selon la revendication 5, **caractérisé par le fait que** les bords (14) de la garniture intérieure (13) sont intérieurement an applique contre les régions marginales (11) des coques inférieure et supérieure (7, 7').

8. Réceptacle selon l'une des revendications précédentes, **caractérisé par le fait que** le profil de solidarisation (4) en matière plastique est constitué d'un polyuréthane.

9. Réceptacle selon l'une des revendications précédentes, **caractérisé par le fait que** ledit réceptacle (1) est une valise à coques rigides.

10. Réceptacle selon l'une des revendications précédentes, **caractérisé par le fait que** la fermeture à glissière (6) est une fermeture à glissière en textile.
